# EUROPEAN PATENT APPLICATION

(11) **EP 2 897 373 A1**
(43) Date of publication of application: **22.07.2015**
(21) Application number: 15150742.3
(22) Date of filing: 12.01.2015
(51) Int. Cl.: H04N 21/4788, H04N 21/414, H04N 21/858

(54) **A system and a method for sharing television content**

(30) Priority: 15.01.2014 EP 14151203
(71) Applicant: Tellyo Oy, 00160 Helsinki (FI)
(72) Inventor: Ostoja-Swierczynski, Mariusz, 00160 Helsinki (FI); Majkowski, Jakub, 00160 Helsinki (FI)
(74) Representative: Pawlowski, Adam

(57) **Abstract**

A method for sharing data related to television content broadcast to television receivers, the method comprising the steps of: executing a content sharing application at the television receiver (120), receiving a content sharing request from a remote controller (122) of the television receiver (120), sending the content sharing request to a sharing server (140, 150) and receiving a link pointing to the location of the requested content-related element at a content storage server (141, 151), identifying a phone number of a user, making the link accessible to the user identified by the phone number.

## Description

The present invention relates to sharing television content.

When watching television programming, users often feel a need to interact with the watched content, for example gain more information about the content, buy an advertised product or share a favorite moment of the programming with other users. It is convenient for users to receive additional content information on devices other than the television receiver, so-called second screen devices, for example mobile phones, so that users can access that content when being away from the television receiver. There have been several attempts to provide means for sharing television content e.g. by allowing the users to share parts of the content being watched in form of short clips, which can be sent directly or via links to other users.

A PCT application WO2006/053011 presents a method for sharing content on television and mobile devices, where a user, while viewing or listening to content can send a link to a sample time slice of the content to another user. It does not present much details of mechanisms to implement that functionality.

A PCT application WO2007/135479 presents a method of sharing television content with a remote device which includes receiving a signal representative of the TV content at a mobile phone, which in response to a user command selects a portion of TV content to be sent to a remote device. This requires the mobile phone to record and transmit the TV content, which consumes considerable resources at the mobile phone.

A European patent application EP1921852 presents a method for sharing television clips, which enables users to share and exchange clips from broadcast media using their mobile devices. Whilst watching broadcast media, a user can cause their mobile device to capture a clip, for example by pressing a button. The capture of the clip enables the user to show and share the clip with friends as part of a system of exchange. Although various possible ways of grabbing of the clip and sharing of the clip are proposed, only a limited number of working embodiments have been presented.

It is the aim of the present invention to provide further improvements to television content sharing to a second screen device, such as a mobile phone.

One aspect presented herein relates to a method for sharing data related to television content broadcast to television receivers, the method comprising the steps of: executing a content sharing application at the television receiver, receiving a content sharing request from a remote controller of the television receiver, sending the content sharing request to a sharing server and receiving a link pointing to the location of the requested content-related element at a content storage server, identifying a phone number of a user, making the link accessible to the user identified by the phone number.

Preferably, the link is made accessible to the user by storing a link at list stored for the user account at a user application server.

Preferably, the method further comprises sending a phone message including a link to the content-related element to the user phone number.

Preferably, the method further comprises sending a phone message including a link to the list of content-related elements of the user to the user phone number.

Preferably, the content sharing request is a request for grabbing a clip of content, and wherein the method comprises sending the request to a clip sharing server configured to store the clip at a content storage server.

Preferably, the content sharing request is a request for content-related data, and wherein the method comprises sending the request to a content-related data sharing server configured to provide a link to the content-related data storage server.

Another aspect relates to a system for sharing television content broadcast to television receivers, the system comprising: an application processor at the television receiver configured to execute an application for receiving a content sharing request from a remote controller of the television receiver, at least one sharing server configured to receive a content-related request from the television receiver and to generate a link pointing to the location of the requested content-related element at a content storage server, a user application server configured to identify a phone number of a user and to make the link accessible to the user identified by the phone number.

The presented system and method are shown by means of example embodiments on a drawing, in which:
Fig. 1 presents a structure of a system for sharing television content.
Fig. 2 presents a method for sharing television content.
Fig. 3 presents a diagram of the user identification process.
Fig. 4A-4F present exemplary user interface screens during operation of the system.
Fig. 5 presents examples of data structures of a user account set at the clips sharing server.
Fig. 6A presents a first example of an SMS message.
Fig. 6B presents a second example of an SMS message.
Fig. 6C presents an example of an SMS message with a link to a voucher.

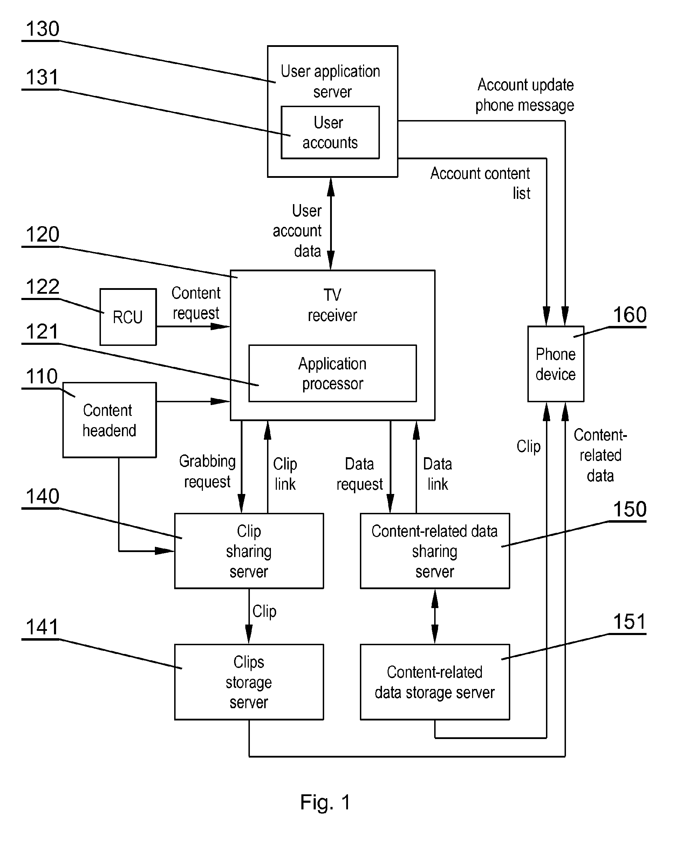

Fig. 1 presents an example of a structure of a system for sharing television content. The television content is provided from a content headend 110 to a plurality of TV receivers 120, for example via a broadcast channel, such as one according to DVB-T, DVB-S, DVB-C, DVB-H, ATSC or IPTV standards. The television receiver may be a TV set or a set-top box, with embedded processor that allows to execute the content sharing application. Usually, the content is provided on various channels, which comprise sequence of programs (segments of content) according to a predefined schedule (defining time slots, i.e. start and end times on which the particular programs are transmitted). For example, the content can be provided in the form of a transport stream according to the MPEG standard.

In the presented system, as a part of the content (television program) to be shared, there is transmitted a content sharing application or a link to a content sharing application which can be downloaded to the TV receiver 120 from a user application server 130, for example via Internet. For example, the content sharing application can be delivered to the receiver 120 as specified in the HbbTV (Hybrid Broadcast Broadband TV) standard (ETSI TS 102 796). Alternatively, the application can be installed at the receiver 120 via other means, such as via a wired or wireless interface, or pre-stored in the receiver 120 as initial software. When the content is watched, a pop-up may appear on the TV screen to inform the user that a content sharing application is available for that content so as to enable the user to trigger the content sharing application via the RCU (Remote Controller Unit) 122. The user can also select content sharing application from a HbbTV launcher that aggregates different application related to TV content watched by the user. The application is executed at the user receiver 120 by an application processor 121. For example, the content sharing application may be provided as a web browser application, using technologies such as HTML, CSS, JavaScript and the application processor 121 may be a web browser capable of executing the application.

The RCU 122 may be a typical television remote controller, a smartphone, a tablet, a voice controlling interface, a gesture controlling interface or any other interface suitable for inputting commands for controlling the application.

The content sharing application executed at the television receiver allows the user to input content sharing requests via the remote control unit (RCU) 122 of the television receiver. The requests can be input via a dedicated button of the RCU 122. Different RCU buttons can be assigned to different types of content sharing requests. For example, a yellow button can be assigned to request for generating a clip of the content for future replay, and a green button can be assigned to request for gathering a voucher related to the content being watched, as explained below.

When the user issues a grabbing request, the request is sent to a particular content server. For example, a request related to generating a clip of content is sent to the clips sharing server 140 (grabbing request) and a request related to obtaining additional content-related data, e.g. a voucher, is sent to the content-related data sharing server 150 (data request). In response to that request, the content sharing application at the television receiver from the server 140, 150 a link to the requested content - either a link to the grabbed clip (clip link) or a link to the requested content-related item, i.e. a voucher (data link). The link points to a location from which the item to be shared can be accessed, e.g. a location at the clips storage server 141 or the content-related data storage server 151. The sharing servers 140, 150 and the storage servers 141, 151, respectively, can be the same servers (the same physical devices or the same logical entities) or separate servers, depending on the particular implementation of the system.

The obtained link to shared content is then sent from the content sharing application at the television receiver to a user application server 130, wherein it is stored at the user account 131 on a list of content shared for that user. When the user account is updated by adding a new link to the user list, a phone message is sent to a second screen device configured for that user account, i.e. a phone device. The phone message can be sent each time the user list is updated or, alternatively, not each time. For example, the phone message can be sent at predetermined periods (e.g. at certain time of day), after a predetermined number of items have been added (e.g. every 10 items), after an item differing from previous items has been added (e.g. only the first item of a particular type is notified by a phone message and other items, such as successive items clips related to the same program are not notified) - this limits the number of messages transmitted to the user. The message includes a link to the new shared content or a link to the user account at the user application server. The user can access the list (account content list) and then select the shared content item for viewing, e.g. watch a clip or use a voucher to buy an item of interest, by communication with the server 141, 151 providing that content. Furthermore, other application can be launched on the same device that would allow to consume/continue the service started on TV screen.

Two examples of clips sharing servers will be discussed as examples below. The first example is a clips sharing server 140 which generates clips upon receiving a clip grab request. Another example is a content-related data sharing server 150, which provides additional types of data for the content, for example additional information about the content or vouchers allowing to buy content. It will be evident for a skilled person that other types of content sharing servers can be used in an equivalent manner.

The system may comprise a sharing server 140 configured to receive requests from the content sharing applications executed at the TV receivers 120, to grab specific content clips and to store the grabbed clips at the content storage server 141. The sharing server 140 may receive the same content provided by the content headend as received by the television receivers. When a request to grab content is received, the channel from which the content is to be grabbed can be determined by determining the identifier of the program-specific content sharing application that generated the request and the content associated with the moment of generation (or receipt) of the grabbing request is recorded to the content storage server 141. For example, the channel from which content is to be recorded can be determined by either extracting information directly from the TV broadcast signal through e.g. DVB EIT tables and methods provided by the HbbTV standard. Hence when application is launched, a message that is sent from the application at the TV receiver is constructed in a way that indicates the identifier of the program from which the content is to be recorded. In order to grab content which occurred before the content grabbing request was received, the clips sharing server 140 comprises means, such as mass storage, e.g. hard disk(s), for storing past content, e.g. storing the last 5 minutes of content.

The clip may have a fixed length, such as 30 seconds. The clip length may be dependent on the program type (e.g. it may be longer for movies and shorter for sports events). The clip length may be specified by the content grabbing request (which can be predefined by the user of the content sharing application). The clip length may be dependent on user account rights (e.g. users with premium accounts may be authorized to grab longer clips). The clip length may be scene-dependent, i.e. the sharing server 140 may have a scene processor configured to detect scenes in programming and grab the whole scene within which the grab request was generated.

The clip end point may be determined by the time of the content grabbing request generation at the television receiver 120 or the time of the receipt of the clip grabbing request at the clips sharing server 140. The clip end point may be further shifted backwards by a predetermined number of seconds, e.g. 5 seconds, to compensate for the delay between the end of the point of interest and the time at which the user entered the command. The clip end point may be shifted to the end of the scene within which the grab request was generated.

The clip start point may be shifted backwards with respect to the clip end point by the clip duration time, e.g. 10 seconds, 30 seconds, 1 minute, etc. Alternatively, the clip start point may be set at a beginning of the scene associated with the content grabbing request.

In case a plurality of grabbing requests are received at the same time or within a short time window (e.g. within 5 seconds), a single clip can be generated for all requests in order to minimize storage space necessary to store the clips at the content storage server 141.

Furthermore, the clips sharing server may be configured to continuously store the last predetermined length of content (e.g. 30 seconds) at the storage server as a clip. In case there is no grabbing request generated for that clip, the clip is deleted and a newer clip is generated. In case there is a grabbing request received for that clip, the clip is stored at the storage server 141 and a new clip is generated apart from the clip already stored.

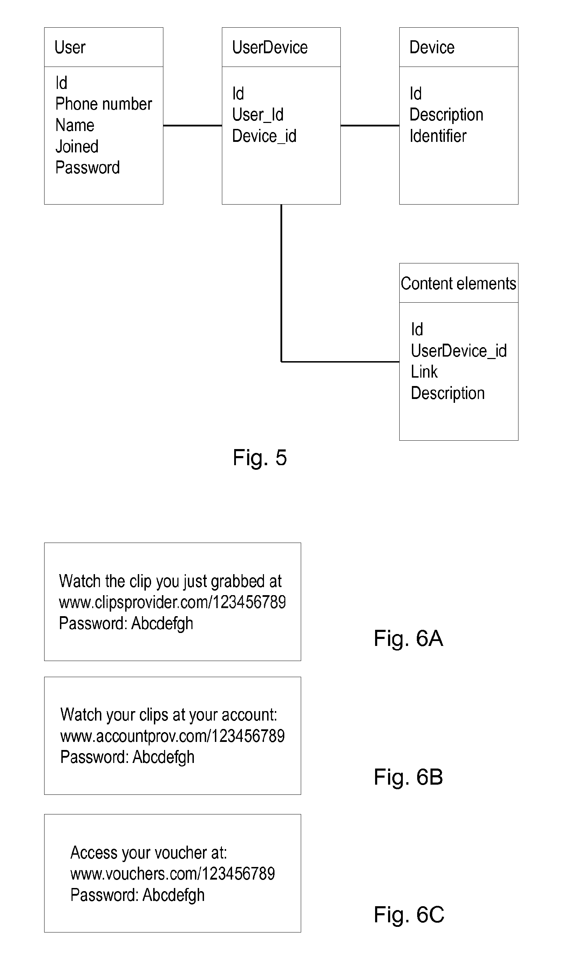

The system may further comprise a content-related data sharing server 150. For example, the system may provide links to additional content-related elements, for example vouchers such as promotional coupons allowing the user to buy products or services at discounted price. The vouchers may be then shared with a user in a similar manner as the clips - Fig. 6C presents an example of an SMS message with a link to a voucher. The vouchers may be displayed by the content sharing application while watching the content, e.g. at a moment when a particular product appears in the content. The voucher may be provided to the storage server by third party via a voucher storage server 151. When a user watches a program, the voucher or voucher-related product is displayed and the user may provide user's phone number to receive the voucher. A link to the content-related data at the server 151 is added to the user content list at the user account and a link to the content-related data is transmitted to the user's phone number in a manner similar to the manner in which the grabbed clips are sent.

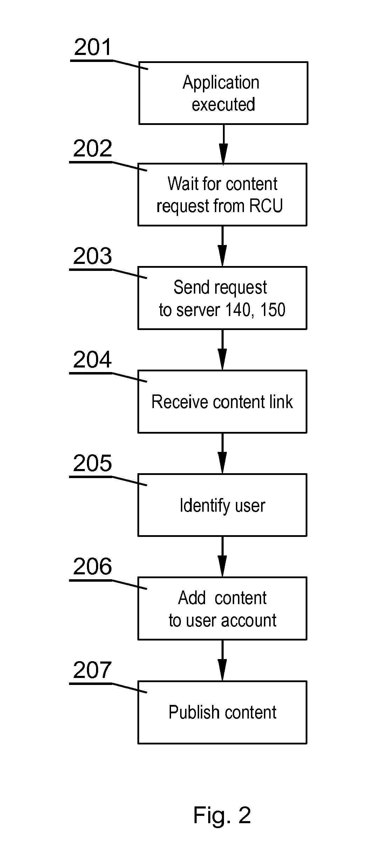

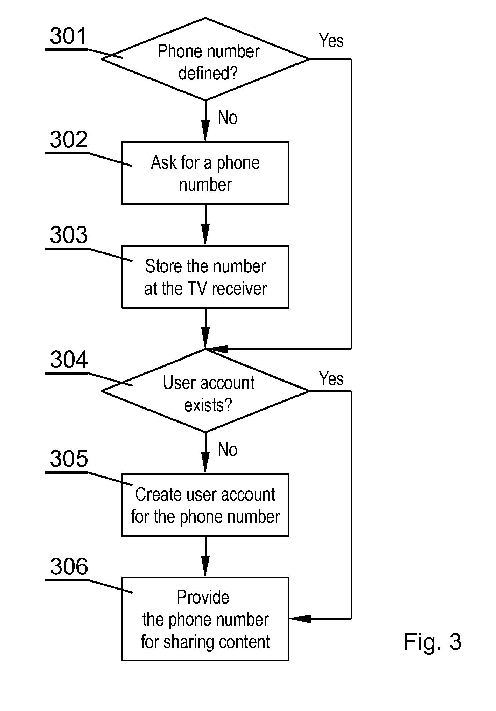

Fig. 2 presents a flow diagram of a procedure for sharing content. First, the content sharing application is executed in step 201 at the application processor 121 of the television receiver 120. Then, the application waits for a grabbing command to be executed by the user. The grabbing is preferably executed by the user by pressing a dedicated button on the RCU 122, for example one button for clip generation request and another button for additional content obtainable when additional content pop-up is displayed. After the grabbing command is received in step 202, the content sharing application sends in step 203 a request to the appropriate server 140, 150 to obtain a link to the requested content, such as to receive the link in step 204. In the meantime, the appropriate server may generate the content-related data, e.g. generate a clip related to the request at the clips storage server 141. Next, the user is identified in step 205 as described in details in Fig. 3. By identifying the user after enabling the generation of the content request, the content can be requested instantaneously after executing the content sharing application, while the user account can be setup later, once a content of interest is identified. Alternatively, the user can be identified before receiving the content request. The link to the content is then added to the identified user account in step 206. Next, in step 207 a message directed to the phone number of the identified user is sent from the user application server 130, the message including either a direct link to the content or a link to the user's list of links. The message may have a form such as an SMS (Short Message Service), an EMS (Enhanced Messaging Service), an MMS (Multimedia Messaging Service), a WhatsApp message (serviced by WhatsApp Messenger platform) or an iMessage (serviced by Apple). The phone number may be an MSISDN number associated with a phone card present in a user's mobile phone device 160, i.e. a second screen device (which can be e.g. a smartphone, a tablet or a laptop with phone functionality). The phone number can be stored as one of user account properties on the server and can be accessed remotely by the content sharing application. It can be stored as a cookie file accessible by the application processor 121, e.g. a web browser. The message can be sent from the user application server 130 via an SMS, EMS or MMS gateway or an Internet-based messaging application for handling messages such as Whatsapp or iMessage.

In case a user receives the message that was not requested by the user, the user can report this event of spamming through a report spam URL included in the message. Reporting the spamming prohibits further delivery of messages to the user originating from a given application processor 121 of the television receiver 120.

Fig. 3 presents a diagram of the user identification process. In step 301 the procedure checks whether a phone number of the user is stored, either in user account settings or in cookies. If not, a user is asked to provide a phone number in step 302. The new number can be entered even if another number is already known to the system in order to allow the user to select one or more of a few numbers to which content should be shared. When a new number is entered, it is stored in step 303, e.g. in a cookie file. Next it is checked in step 304 if there is a content sharing account associated with that number. If not, the account is created in step 305. The account may be activated automatically or only after verification by sending an activation message to the phone number and activating the account only after the message is read by the user and after the user confirms creation of the account by visiting an address specified in a link sent in the message. A user may have more than one number associated with an account, e.g. to share content among a plurality of devices at the same time. Next, in step 306 the phone number(s) are provided as an identifier of the recipient of the content to be shared.

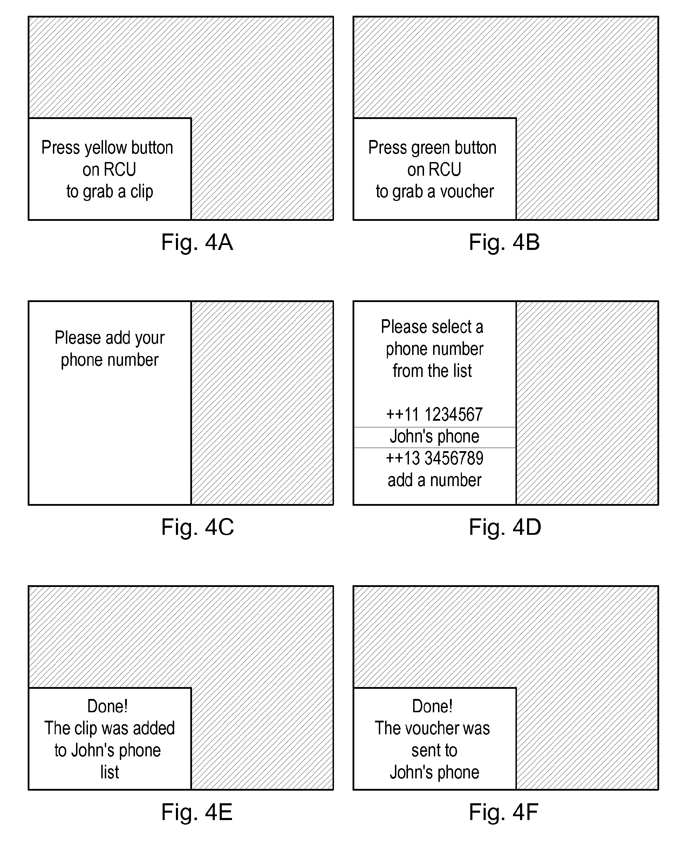

Fig. 4A-4F present exemplary user interface screens when using the system.

Fig. 4A presents a screen with some television content in background, when a pop-up is displayed informing the user that clips can be grabbed by pressing a yellow button. Such pop-up can be displayed in step 201 at predetermined events, e.g. at the start of the television program for which clip grabbing is enabled by the system, upon the user switching to that program, after each commercial break, at predetermined time intervals, at random time intervals, etc. The screen can be displayed for a short period e.g. 3 seconds or until a user presses a RCU button to deactivate it.

Fig. 4B presents a screen when a pop-up is displayed informing the user that voucher can be collected by pressing a green button. Such pop-up can be displayed in step 201 at predetermined event in the program, e.g. when a particular advertisement is displayed related to the voucher (e.g. advertisement of a restaurant) or a particular content is shown in the television program (e.g. a car).

Fig. 4C presents a screen when a pop-up is displayed asking the user for a phone number for which content shall be shared. Such pop-up can be displayed after the user sends a request for content, in step 205 in case when no phone number is defined for that user.

Fig. 4D presents a screen when a pop-up is displayed asking the user to select a phone number for which content shall be shared. Such pop-up can be displayed after the user sends a request for content, in step 205 in case when there exist phone numbers in the cookie files for that television receiver. The user may select one or more numbers to share the content. The numbers can be presented as direct numbers or as user names. Alternatively, the user may select the last option to add a new number, when the pop-up of Fig. 4C can be displayed.

Fig. 4E presents a screen when a pop-up is displayed informing the user that the requested clip was grabbed and added to the list of items at the account associated with the selected telephone number. At the same time a phone message is sent to the selected number, such as shown in Fig. 6A or 6B.

Fig. 4F presents a screen when a pop-up is displayed informing the user that the requested voucher was collected and added to the list of items at the account associated with the selected telephone number and a message has been sent to the user. At the same time a phone message is sent to the selected number, such as shown in Fig. 6C.

Fig. 5 presents examples of data structures of user account 131 set at the user application server 130.

A User structure stores data on registered user accounts, including but not limited to:
- User ID
- Phone number(s) of the user
- User name and/or other data, such as nickname, graphical avatar etc.
- Date when user joined the system
- Password to access user account

User structure may further comprise credentials to a social networking site, e.g. Facebook or Twitter, in order to share the list of clips at the user account at the social networking site.

A Device structure stores data on registered devices, including but not limited to:
- Device ID
- Device description, such as "living room tv", "kitchen tv" etc.
- Device identifier, e.g. a MAC address, a serial number or another unique identifier of the device or an identifier assigned to the device by the clips sharing server

A UserDevice structure stores associations between users and devices.

A Content elements structure stores information on content-related items, such as grabbed clips of content or vouchers, including but not limited to:
- UserDevice_ID - identifying the user and device who grabbed the content
- Link - e.g. Internet hyperlink to the location at the content storage server 141 or 151 at which the content can be accessed
- Description of content

Fig. 6A presents a first example of an SMS message sent to the user with a link to the content. The message may include a password to access the content.

Fig. 6B presents a second example of an SMS message sent to the user with a link to the user account, at which a list of all grabbed clips can be accessed. The message may include a password to access the account page.

The webpage can be a webpage of the broadcaster, e.g. the television channel at which the content was broadcast. Alternatively, it can be a webpage of global clips provider or content-related data manager.

The clip may be identified by a token number generated by the clips sharing server. For example, the token number can comprise an identifier of program and time at which the clip is generated.

The account may be identified by a hash number generated by the clips sharing server, a user name or a user's phone number (including the country code).

The presented system and method allow easy and intuitive content sharing between a television receiver and a second screen device, i.e. a phone device. The content sharing application is preferably presented to the user while watching the television program as a popup, which encourages the user to use the system. Content grabbing is executed by using the same device as used while watching the TV, i.e. the remote controller of the TV receiver, by pressing a single button at the time of interest. However, the content is then made available to a user's second screen device, e.g. a smartphone, via a different channel than the channel of delivery of the broadcast content, namely via phone network as e.g. an SMS message sent to the phone number of the user. The user can then access the content via a third channel (e.g. Internet) by accessing the content indicated by the link sent in the phone message or by visiting the webpage of the user account and selecting a link of interest from the list of content items shared for that user. The system stores lists of user content at a user account, via which the user can easily access the grabbed content clips. The system does not require installation of additional software components at the user's second screen device, provided that device can access links sent in the message.

It can be easily recognized, by one skilled in the art, that the aforementioned method for sharing content may be performed and/or controlled by one or more dedicated electronic circuits or computer programs. Such computer programs are typically executed by utilizing the computing resources of the device. The computer programs can be stored in a non-volatile memory (or otherwise a non-transitory computer storage medium), for example a flash memory or in a volatile memory, for example RAM and are executed by the processing unit. These memories are exemplary recording media for storing computer programs comprising computer-executable instructions performing all the steps of the method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

In addition, any combination of the appended claims in envisaged in the present application.

## Claims

1. A method for sharing data related to television content broadcast to television receivers, the method comprising the steps of:
- executing a content sharing application at the television receiver (120),
- receiving a content sharing request from a remote controller (122) of the television receiver (120),
- sending the content sharing request to a sharing server (140, 150) and receiving a link pointing to the location of the requested content-related element at a content storage server (141, 151),
- identifying a phone number of a user,
- making the link accessible to the user identified by the phone number.

2. The method according to claim 1, wherein the link is made accessible to the user by storing a link at list stored for the user account (131) at a user application server (130).

3. The method according to claim 1, further comprising sending a phone message including a link to the content-related element to the user phone number.

4. The method according to claim 1, further comprising sending a phone message including a link to the list of content-related elements of the user to the user phone number.

5. The method according to claim 1, wherein the content sharing request is a request for grabbing a clip of content, and wherein the method comprises sending the request to a clip sharing server (140) configured to store the clip at a content storage server (141).

6. The method according to claim 1, wherein the content sharing request is a request for content-related data, and wherein the method comprises sending the request to a content-related data sharing server (150) configured to provide a link to the content-related data storage server (151).

7. A system for sharing television content broadcast to television receivers, the system comprising:
- an application processor (121) at the television receiver (120) configured to execute an application for receiving a content sharing request from a remote controller (122) of the television receiver (120),
- at least one sharing server (140, 150) configured to receive a content-related request from the television receiver (120) and to generate a link pointing to the location of the requested content-related element at a content storage server (141, 151),
- a user application server (130) configured to identify a phone number of a user and to make the link accessible to the user identified by the phone number.
